# DEMANDE DE BREVET EUROPEEN

(11) **EP 3 263 383 A1**
(43) Date de publication de la demande: **03.01.2018**
(21) Numéro de dépôt: 17305740.7
(22) Date de dépôt: 16.06.2017
(51) Int. Cl.: B60K 6/48, B60K 6/365, B60K 6/383, B60K 6/387, B60K 6/547, F16H 3/72

(54) **GROUPE MOTOPROPULSEUR DE VEHICULE HYBRIDE AVEC UN DISPOSITIF DE CONNEXION/DECONNEXION DE LA MACHINE ELECTRIQUE**

(30) Priorité: 29.06.2016 FR 1656118
(71) Demandeur: IFP Energies nouvelles, 92500 Rueil-Malmaison (FR)
(72) Inventeur: VENTURI, Stephane, 7100 Roiffieux (FR); MAGAND, Sebastien, 92500 Rueil-Malmaison (FR)

(57) **Abrégé**

La présente invention concerne un groupe motopropulseur de véhicule hybride, comportant une machine motrice/réceptrice (20), un moteur thermique (10) avec un arbre moteur (12), un dispositif de variation de vitesse (14) comprenant un train épicycloïdal de moteur (24) avec un planétaire (34) et une couronne (42) reliés chacun à l'arbre de moteur (12) par un accouplement à commande contrôlée de moteur (26, 28) et à une partie fixe (40) du groupe par un accouplement automatique unidirectionnel (30, 32) et un porte-satellites (46), et un train épicycloïdal de machine (60) placé sur un arbre (62) sensiblement parallèle à l'arbre de moteur (12) et comprenant un planétaire (64), une couronne (72), un porte-satellites (68) et un accouplement à commande contrôlée de train épicycloïdal (88).

Selon l'invention, le dispositif de variation de vitesse (14) comprend un dispositif de connexion/déconnexion (94) de la machine électrique (20) avec le train épicycloïdal de machine (60).

## Description

La présente invention se rapporte à un groupe motopropulseur en particulier pour véhicule hybride.

Comme cela est déjà connu, un véhicule hybride comporte un groupe motopropulseur qui utilise, seul ou en combinaison, comme mode d'entraînement en traction/propulsion, un moteur thermique à combustion interne avec un dispositif de transmission à variation de vitesse, et/ou une machine motrice/réceptrice, comme une machine électrique rotative reliée à une source électrique, telle qu'une ou plusieurs batteries.

Cette combinaison a pour avantage d'optimiser les performances de ce véhicule, notamment en réduisant les émissions de polluants dans l'atmosphère et en diminuant la consommation en carburant.

Ainsi, lorsque l'on souhaite déplacer le véhicule avec un couple important sur une grande plage de vitesses tout en limitant la génération de gaz d'échappement et de bruit, comme dans un site urbain, l'utilisation de la machine électrique est privilégiée pour entraîner en déplacement ce véhicule.

Par contre, le moteur thermique est utilisé pour déplacer ce véhicule lors d'utilisations où une puissance d'entraînement élevée et une grande autonomie de fonctionnement sont demandées.

Comme cela est déjà connu par la demande de brevet français N° 2 955 165 du demandeur, un tel groupe motopropulseur de véhicule automobile comprend un moteur thermique avec un arbre relié à un dispositif de transmission à variation de vitesse comportant un train épicycloïdal avec un planétaire et une couronne reliés chacun à l'arbre du moteur thermique par un accouplement à commande contrôlée et à une partie fixe du groupe par un accouplement automatique unidirectionnel, et un porte-satellites transmettant la variation de vitesse à l'essieu moteur du véhicule par l'intermédiaire d'une voie de transmission.

De façon à augmenter la capacité de variation de vitesse lors de l'entraînement du véhicule par la machine électrique, le demandeur a associé, au dispositif de transmission à variation de vitesse du document précité, un autre train épicycloïdal reliant le train épicycloïdal de moteur à la voie de transmission de mouvement à l'essieu moteur de ce véhicule, comme cela est décrit dans la demande de brevet français N° 2 962 697 du demandeur.

Le demandeur a encore plus perfectionné ce dispositif de transmission en proposant un dispositif qui permet de déconnecter la machine électrique en augmentant la possibilité d'obtenir d'autres gammes de rapport lors du fonctionnement avec le moteur thermique.

A cet effet, l'invention concerne un groupe motopropulseur de véhicule hybride, comportant une machine motrice/réceptrice, un moteur thermique avec un arbre moteur, un dispositif de variation de vitesse comprenant un train épicycloïdal de moteur avec un planétaire et une couronne reliés chacun à l'arbre de moteur par un accouplement à commande contrôlée de moteur et à une partie fixe du groupe par un accouplement automatique unidirectionnel et un porte-satellites, et un train épicycloïdal de machine placé sur un arbre sensiblement parallèle à l'arbre de moteur et comprenant un planétaire, une couronne, un porte-satellites et un accouplement à commande contrôlée de train épicycloïdal, caractérisé en ce que dispositif de variation de vitesse comprend un dispositif de connexion/déconnexion de la machine électrique avec le train épicycloïdal de machine (60).

Le dispositif de connexion/déconnexion peut comprendre une roue dentée de liaison et un accouplement à commande contrôlée de machine portés par l'arbre du planétaire du train épicycloïdal de machine.

Le dispositif de connexion/déconnexion peut comprendre une roue dentée portée fixement par l'arbre du planétaire du train épicycloïdal de machine et un accouplement à commande contrôlée de machine porté par un fourreau entourant le rotor de la machine électrique et comportant un pignon denté coopérant avec la roue dentée portée fixement par l'arbre du planétaire.

La roue dentée portée fixement par l'arbre du planétaire peut comprendre une surface d'accouplement pour l'accouplement à commande contrôle de train épicycloïdal.

L'arbre du planétaire peut comprendre une surface d'accouplement pour l'accouplement à commande contrôle de train épicycloïdal.

La roue dentée de liaison peut porter au moins une surface d'accouplement avec au moins l'accouplement à commande contrôlée de machine.

La roue dentée de liaison peut porter une surface d'accouplement avec l'accouplement à commande contrôlée de train épicycloïdal.

L'accouplement à commande contrôlée peut comprendre un synchroniseur à double effet.

Les autres caractéristiques et avantages de l'invention vont apparaître maintenant à la lecture de la description qui va suivre, donnée à titre uniquement illustratif et non limitatif, et à laquelle sont annexées :
- la figure 1 qui est un schéma montrant un dispositif de transmission à variation de vitesse d'un groupe motopropulseur selon l'invention,
- la figure 2 qui illustre schématiquement une variante de la figure 1, et
- la figure 3 qui montre une autre variante de la figure 1.

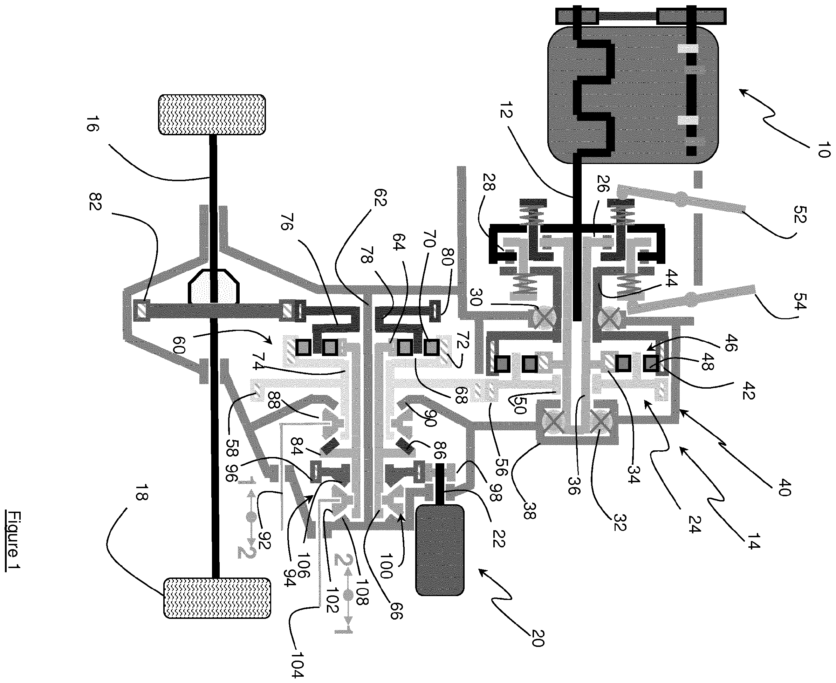

Sur la figure 1, le groupe motopropulseur comprend un moteur thermique 10, notamment un moteur à combustion interne, avec un arbre moteur 12, ici issu du vilebrequin de ce moteur, un dispositif de transmission à variation de vitesse 14 et un essieu moteur 16 qui permet d'entraîner les roues motrices 18 du véhicule.

Le groupe motopropulseur comprend également une machine motrice/réceptrice, comme un moteur électrique 20 avec un rotor 22, qui peut fonctionner en tant que moteur électrique d'entraînement pour le véhicule en étant connecté à une source de courant électrique, comme des batteries (non représentées) ou en tant que générateur d'énergie électrique et plus particulièrement en tant qu'alternateur pour assurer la charge de ces batteries.

Bien entendu et cela sans sortir du cadre de l'inventions cette machine motrice/réceptrice peut être de tout autre type comme une machine hydraulique, électrohydraulique,...

Le dispositif de variation de vitesse 14 comprend un train épicycloïdal principal 24, baptisé train épicycloïdal de moteur, avec deux accouplements à commande contrôlée, dits de moteur 26, 28, ici sous la forme d'embrayage à friction, et deux accouplements automatiques unidirectionnels, comme des roues libres 30, 32.

Plus précisément, le train épicycloïdal de moteur 24 comprend un planétaire 34 denté extérieurement et porté par un arbre creux 36, dit arbre de planétaire, venant coiffer l'arbre 12 du moteur en étant libre en rotation mais fixe en translation par rapport à celui-ci. L'extrémité libre de cet arbre prend appui dans un palier 38 porté par une partie fixe 40 du groupe motopropulseur au travers de la roue libre 32, baptisée roue libre planétaire, qui n'autorise la rotation du planétaire que dans un seul sens.

Ce train comprend également une couronne 42 dentée intérieurement, placé concentriquement au planétaire, et reliée à un arbre creux 44, dit arbre de couronne, venant entourer l'arbre creux 36 du planétaire tout en étant libre en rotation mais fixe en translation par rapport à celui-ci. Cette couronne est reliée extérieurement à une partie fixe 40 du groupe motopropulseur du véhicule par l'accouplement unidirectionnel 30, baptisé roue libre couronne, qui n'autorise la rotation de la couronne que dans un seul sens.

Bien entendu, les deux roues libres 30 et 32 sont placées de manière telle que le planétaire 34 et la couronne 42 ne puissent tourner que dans le même sens et préférentiellement dans le même sens que l'arbre moteur 12.

Enfin, ce train épicycloïdal de moteur comprend un porte-satellites 46 avec avantageusement trois satellites 48, en forme de roue à denture extérieure, placés dans un même intervalle angulaire l'un par rapport à l'autre (ici à 120°) et engrenant avec la couronne et le planétaire.

Pour cela, la couronne 42, le planétaire 34 et les satellites 48 sont situés dans un même plan, ici dans un plan vertical en considérant la figure 1.

Ces satellites sont portés chacun par un axe horizontal qui est relié à un palier tubulaire 50, dit palier de porte-satellites, qui vient entourer l'arbre de planétaire 36 en étant libre en rotation sur celui-ci.

Les extrémités libres des arbres du planétaire et de la couronne portent chacune un accouplement à commande contrôlée 26 et 28, de préférence un embrayage à friction contrôlé chacun par une commande à levier 52 et 54.

Ainsi l'embrayage 26, dit embrayage de planétaire, permet d'accoupler le planétaire avec l'arbre moteur 12 alors que l'embrayage 28, dénommé embrayage de couronne, a pour but d'accoupler la couronne avec cet arbre moteur.

Comme mieux visible sur la figure 1, le porte-satellites 46 comporte également un bandeau additionnel denté extérieurement 56 disposé à l'opposé des satellites et qui est relié par engrènement avec un bandeau de liaison denté extérieurement 58 d'un autre train épicycloïdal additionnel 60, dénommé train épicycloïdal de machine.

Ce train épicycloïdal 60 est placé sur un arbre fixe 62, sensiblement parallèle à l'arbre moteur 12.

Le train épicycloïdal de machine comprend un planétaire 64 denté extérieurement et lié en rotation avec un arbre tubulaire 66 entourant l'arbre fixe 62.

Ce planétaire coopère avec un porte-satellites 68 comprenant avantageusement trois satellites 70, en forme de roue à denture extérieure, portés par des axes de satellites placés dans un même intervalle angulaire l'un par rapport à l'autre (ici à 120°) et engrenant avec la couronne 72 du train épicycloïdal de machine.

Cette couronne est portée par un arbre tubulaire 74 qui entoure l'arbre du planétaire 66.

Bien entendu, comme pour le train épicycloïdal de moteur 24, la couronne, le planétaire et les satellites sont situés dans un même plan, ici dans un plan vertical en considérant la figure 1.

Comme mieux visible sur la figure, les axes de satellites 70 sont portés par un voile 76 fixé sur un palier tubulaire 78 entourant l'arbre fixe 62.

Ce palier tubulaire porte fixement une roue dentée extérieurement 80 qui coopère avec une autre roue dentée 82 liée à l'essieu moteur 16 en formant ainsi une voie de transmission de mouvement entre le train épicycloïdal de machine 60 et l'essieu 16.

En considérant la droite de la figure 1, l'arbre tubulaire de planétaire 66 porte fixement un voile 84 portant une surface d'accouplement 86 qui coopère avec un accouplement à commande contrôlée 88 porté par l'arbre de la couronne.

Cet accouplement permet ainsi de relier l'arbre de couronne 74, soit à l'arbre de planétaire 66, soit à une surface d'accouplement fixe 90 portée par la partie fixe 40.

De manière avantageuse, cet accouplement comprend un synchroniseur à double effet, dit synchroniseur de train épicycloïdal, avec deux positions d'accouplement (référencées 1 et 2 et une position neutre représentée par un point entre les références 1 et 2). Ce synchroniseur est porté fixement en rotation mais librement en translation par l'arbre de couronne 74 et est prévu pour coopérer, sous l'effet d'un moyen de commande 92, soit à la surface d'accouplement 86 du voile 84, soit à la partie fixe 40 du groupe motopropulseur par la surface 90.

L'arbre de planétaire 66 porte également un dispositif de connexion/déconnexion 94 entre le train épicycloïdal de machine 60 et la machine électrique 20.

Sur la figure 1, ce dispositif comprend une roue de liaison 96 dentée extérieurement qui coopère avec une roue dentée extérieurement 98 portée fixement par le rotor 22 de la machine électrique. Cette roue dentée de liaison est libre en rotation sur l'arbre de planétaire en étant en vis à vis d'un accouplement à commande contrôlée 100 porté par l'arbre de ce même planétaire.

Cet accouplement permet ainsi de relier l'arbre de planétaire 66 avec la machine électrique 20 ou avec la partie fixe 40.

De manière avantageuse, cet accouplement comprend un synchroniseur à double effet 102, dit synchroniseur de machine, avec deux positions d'accouplement (référencées 1 et 2) et une position neutre (représentée par un point entre les références 1 et 2). Ce synchroniseur est porté fixement en rotation mais librement en translation par l'arbre de planétaire 66 et est prévu pour coopérer, sous l'effet d'un moyen de commande 104, soit à une surface d'accouplement 106 portée par la roue dentée de liaison 96, soit à la partie fixe 40 du groupe motopropulseur par une autre surface d'accouplement 108.

Les différentes configurations de l'ensemble du groupe motopropulseur vont être maintenant décrites.

Lorsque le synchroniseur de machine 102 est en position 1, il permet de relier l'arbre de planétaire 66 avec la partie fixe 40 du groupe motopropulseur et la machine électrique 20 est déconnectée de cet arbre de planétaire par la rotation libre de la roue dentée de liaison 96.

Dans cette configuration, le groupe moto propulseur peut fonctionner avec trois rapports de vitesse thermique et réaliser en outre une fonction de frein de parking. Les trois rapports de vitesse thermique ne sont possibles que si le synchroniseur 88 est en position centrale. Dans ce cas, le train épicycloïdal de machine 60 sert de réducteur, et les trois rapports de vitesse thermique ont des ratios inférieurs.

Les positions 1 et 2 du synchroniseur 88 correspondent toutes deux à la fonction de frein de parking. Dans la position 1, la couronne 72 est bloquée sur la partie fixe 40 directement par l'intermédiaire de la surface 90. Dans la position 2, la couronne 72 est solidaire du planétaire 64, qui lui-même est déjà connecté à la partie fixe 40 par l'intermédiaire de la surface 108. Dans les deux cas, deux des arbres du train épicycloïdal de machine sont bloqués en étant liés à la partie fixe, ce qui bloque le porte-satellites 68, et par conséquent l'essieu 16.

Dans la position 2 du synchroniseur 102, la roue dentée de liaison 96 est reliée à l'arbre de planétaire 66 au travers de ce synchroniseur.

Par cette liaison, la machine électrique est connectée au train épicycloïdal de machine 60 et le groupe moto propulseur peut fonctionner avec deux modes d'entraînement électriques, ou trois modes de transmission continument variable (eCVT) ou trois modes hybrides.

En position neutre, la machine électrique est également déconnectée et n'exerce aucune action sur le train épicycloïdal de machine 60. Dans cette position neutre du synchroniseur 102, lorsque le synchroniseur 88 est en position 2, la couronne 72 et le planétaire 64 sont solidaires. Tous les arbres du train épicycloïdal de machine ont le même régime. Dans cette configuration, le groupe motopropulseur peut fonctionner avec trois modes thermiques pures, dont les rapports entre moteur thermique et essieu sont identiques à ceux des trois modes hybrides cités ci-dessus.

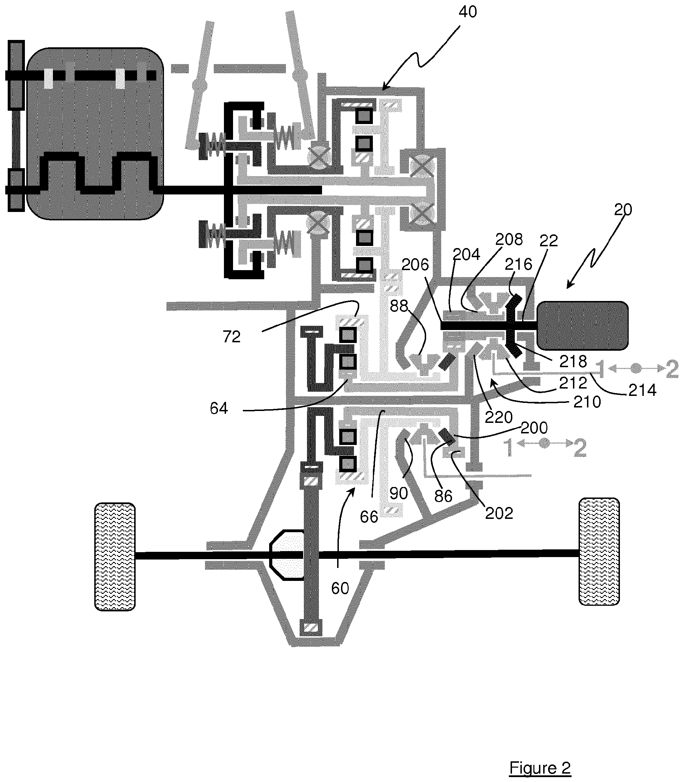

La variante de la figure 2 se distingue de l'exemple de la figure 1 uniquement par une configuration spécifique du dispositif de connexion/déconnexion entre le train épicycloïdal de machine 60 et la machine électrique 20.

Ce dispositif comprend une roue dentée fixe 200 avec l'arbre du planétaire 66 qui porte une surface d'accouplement 86 avec le synchroniseur de train 88. Le bandeau denté 202 de cette roue dentée coopère avec un pignon denté 204 monté fou sur un prolongement 206 du rotor 22 de la machine électrique 20. Le pignon 204 est lié fixement à un fourreau 208 également monté fou sur le prolongement 206 et qui porte un accouplement à commande contrôlée 210.

Comme pour l'exemple de la figure 1, cet accouplement comprend un synchroniseur à double effet 212, dit synchroniseur de machine, avec deux positions d'accouplement (référencées 1 et 2) et une position neutre (représentée par un point entre les références 1 et 2). Ce synchroniseur est porté fixement en rotation mais librement en translation par le fourreau 208 et est prévu pour coopérer, sous l'effet d'un moyen de commande 214, soit à une surface d'accouplement 216 portée par un flasque 218 placé de manière fixe sur le rotor et son prolongement, soit à la partie fixe 40 du groupe motopropulseur par une autre surface d'accouplement 220.

Les différentes configurations de l'ensemble du groupe motopropulseur pour l'exemple illustré à la figure 2 sont décrites comme suit.

Lorsque le synchroniseur de machine 212 est en position 1, il permet de relier le pignon denté et son fourreau 208 avec la partie fixe 40 du groupe motopropulseur et l'ensemble pignon-fourreau-arbre de planétaire 66 est bloqué en rotation. La machine est, dans cette configuration, déconnectée du train 60

Le groupe motopropulseur peut alors fonctionner avec trois rapports de vitesse thermique Le fonctionnement est strictement identique à celui décrit précédemment pour la figure 1 lorsque le synchroniseur 102 est en position 1, bloquant l'arbre 66 au carter.

Les trois rapports de vitesse thermique ne sont possibles que si le synchroniseur 88 est en position centrale. Dans ce cas le train épicycloïdal de machine 60 sert de réducteur, et les trois rapports de vitesse thermique ont des rapports inférieurs.

Les positions 1 et 2 du synchroniseur 88 correspondent toutes deux à la fonction de frein de parking. Dans la position 1, la couronne 72 est bloquée sur la partie fixe 40 directement par l'intermédiaire de la surface 90. Dans la position 2, la couronne 72 est solidaire du planétaire 64, qui lui-même est déjà connecté à la partie fixe 40 par l'intermédiaire des roues dentées 202 et 204, du fourreau 208, du synchroniseur 210 et de la surface 220. Dans les deux cas, deux des arbres du train de machine sont bloqués en étant liés au carter, ce qui bloque le porte-satellites 68, et par conséquent l'essieu 16

Dans la position 2 de ce synchroniseur, le pignon et son fourreau sont reliés à l'ensemble rotor-prolongement de rotor qui permet alors l'entrainement en rotation de l'arbre de planétaire 66.

Par cette liaison, la machine électrique est connectée au train épicycloïdal de machine 60 et le groupe motopropulseur peut fonctionner avec deux modes d'entraînement électriques, ou trois modes de transmission continument variable (eCVT) ou trois modes hybrides. Le fonctionnement est ici identique à celui décrit pour la figure 1, lorsque le synchroniseur 102 est en position 2.

En position neutre, la machine électrique est également déconnectée du train épicycloïdal de machine 60 n'exerce aucune action sur ce train. Dans cette position neutre du synchroniseur 212, lorsque le synchroniseur 88 est en position 2, la couronne 72 et le planétaire 64 sont solidaires. Tous les arbres du train de machine ont le même régime. Dans cette configuration, le groupe motopropulseur peut fonctionner avec trois modes thermiques pures, dont les ratios entre moteur thermique et essieu sont identiques à ceux des trois modes hybrides cités ci-dessus.

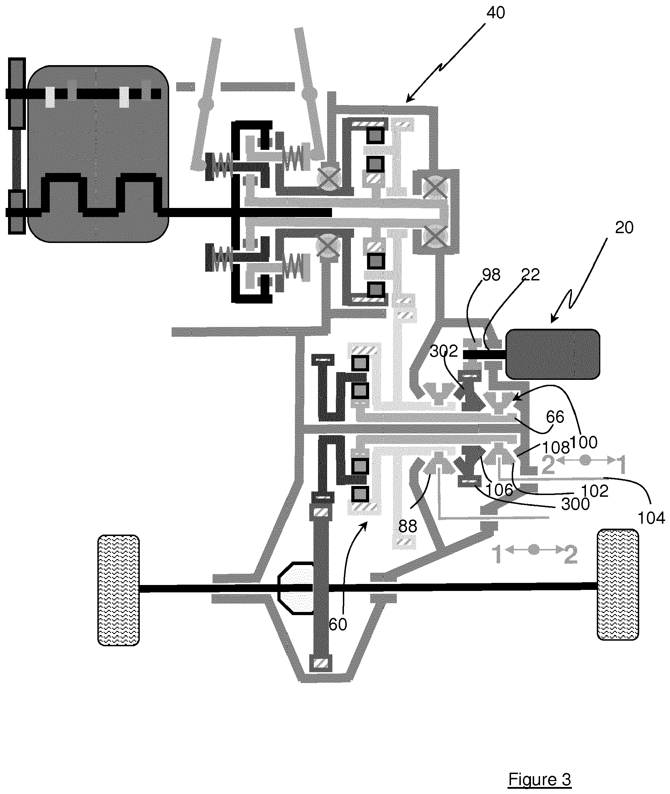

La variante du dispositif de connexion/déconnexion entre le train épicycloïdal de machine 60 et la machine électrique 20 de la figure 3 se distingue de l'exemple de la figure 1 uniquement par le fait que le dispositif de connexion/déconnexion est dépourvu du voile 84 de la figure 1 et que la surface d'accouplement que portait ce voile est maintenant placée sur la roue dentée de liaison.

Comme mieux visible sur la figure 3, la roue de liaison 300 dentée extérieurement coopère avec la roue dentée extérieurement 98 portée fixement par le rotor 22 de la machine électrique 20. Cette roue dentée de liaison porte sur sa face en regard du synchroniseur de train 88 une surface d'accouplement 302 apte à coopérer avec ce synchroniseur. L'autre face de cette roue dentée de liaison porte une surface d'accouplement 106 en vis à vis avec un accouplement à commande contrôlée 100 porté par l'arbre du planétaire 66.

Comme pour l'exemple de la figure 1, cet accouplement à commande contrôlée est également un synchroniseur à double effet 102, dit synchroniseur de machine, avec deux positions d'accouplement (référencées 1 et 2) et une position neutre (représentée par un point entre les références 1 et 2).

Ce synchroniseur est porté fixement en rotation mais librement en translation par l'arbre de planétaire 66 et est prévu pour coopérer, sous l'effet d'un moyen de commande 104, soit à une surface d'accouplement 106 portée par la roue dentée de liaison 96, soit à la partie fixe 40 du groupe motopropulseur par une autre surface d'accouplement 108.

Les différentes configurations de l'ensemble du groupe motopropulseur vont être maintenant détaillées dans le tableau ci-après.

| **88** | **100** | **Rapport** |
|---|---|---|
| **Position du synchroniseur de train épicycloïdal** | **Position du synchroniseur de machine** | |
| 1 | 1 | Frein de parking |
| 1 | 0 | Point mort |
| 1 | 2 | 1 rapport électrique court pour marche avant/arrière |
| 0 | 1 | 3 rapports thermiques courts |
| 0 | 0 | Point mort |
| 0 | 2 | 3 modes eCVT (transmission continument variable) |
| 2 | 1 | 3 rapports hybrides parallèles courts + 1 rapport électrique intermédiaire |
| 2 | 0 | 1 rapport pour recharge batterie |
| 2 | 2 | 3 rapports hybrides parallèles longs + 1 rapport électrique long |

## Revendications

1. Groupe motopropulseur de véhicule hybride, comportant une machine motrice/réceptrice (20), un moteur thermique (10) avec un arbre moteur (12), un dispositif de variation de vitesse (14) comprenant un train épicycloïdal de moteur (24) avec un planétaire (34) et une couronne (42) reliés chacun à l'arbre de moteur (12) par un accouplement à commande contrôlée de moteur (26, 28) et à une partie fixe (40) du groupe par un accouplement automatique unidirectionnel (30, 32) et un porte-satellites (46), et un train épicycloïdal de machine (60) placé sur un arbre (62) sensiblement parallèle à l'arbre de moteur (12) et comprenant un planétaire (64), une couronne (72), un porte-satellites (68) et un accouplement à commande contrôlée de train épicycloïdal (88), **caractérisé en ce que** dispositif de variation de vitesse(14) comprend un dispositif de connexion/déconnexion (94) de la machine électrique (20) avec le train épicycloïdal de machine (60).

2. Groupe motopropulseur selon la revendication 1, **caractérisé en ce que** le dispositif de connexion/déconnexion (94) comprend une roue dentée de liaison (96, 300) et un accouplement à commande contrôlée de machine (100) portés par l'arbre (66) du planétaire (64) du train épicycloïdal de machine (60).

3. Groupe motopropulseur selon la revendication 1, **caractérisé en ce que** le dispositif de connexion/déconnexion (94) comprend une roue dentée (200) portée fixement par l'arbre (66) du planétaire (64) du train épicycloïdal de machine (60) et un accouplement à commande contrôlée de machine (210) porté par un fourreau (208) entourant le rotor (22) de la machine électrique (20) et comportant un pignon denté (204) coopérant avec la roue dentée (200 portée fixement par l'arbre (66) du planétaire (64).

4. Groupe motopropulseur selon la revendication 3, **caractérisé en ce que** la une roue dentée (200) portée fixement par l'arbre (66) du planétaire (64) comprend une surface d'accouplement (86) pour l'accouplement à commande contrôle de train épicycloïdal (88).

5. Groupe motopropulseur selon la revendication 1, **caractérisé en ce que** l'arbre (66) du planétaire (64) comprend une surface d'accouplement (86) pour l'accouplement à commande contrôle de train épicycloïdal (88).

6. Groupe motopropulseur selon la revendication 1 ou 2, **caractérisé en ce que** la roue dentée de liaison (96, 300) porte au moins une surface d'accouplement (106, 302) avec au moins l'accouplement à commande contrôlée de machine (100).

7. Groupe motopropulseur selon la revendication 1 ou 2, **caractérisé en ce que** la roue dentée de liaison (300) porte une surface d'accouplement (302) avec l'accouplement à commande contrôlée de train épicycloïdal (88).

8. Groupe motopropulseur selon l'une des revendications précédentes, **caractérisé en ce que** l'accouplement à commande contrôlée comprend un synchroniseur à double effet (100, 210).
